# EUROPEAN PATENT APPLICATION

(11) **EP 3 553 729 A1**
(43) Date of publication of application: **16.10.2019**
(21) Application number: 17879770.0
(22) Date of filing: 26.10.2017
(51) Int. Cl.: G06Q 30/06

(54) **INFORMATION PROCESSING DEVICE AND PROGRAM**

(30) Priority: 12.12.2016 JP 2016240012
(71) Applicant: Sony Corporation, Tokyo 108-0075 (JP)
(72) Inventor: SUEYOSHI, Masahiro, Tokyo 108-0075 (JP)
(74) Representative: Witte, Weller & Partner Patentanwälte mbB
(86) International application number: PCT/JP2017/038757
(87) International publication number: WO 2018/110116

(57) **Abstract**

[Object] To prevent a user from forgetting to purchase items.

[Solution] Provided is an information processing apparatus including: a processing unit configured to, in a case where a predetermined signal wirelessly transmitted from an external apparatus is detected, cause communication to be established with the external apparatus and cause purchase condition information indicating a purchase condition of one or both of an item and a service to be transmitted to the external apparatus via the communication established with the external apparatus.

## Description

### Technical Field

The present disclosure relates to an information processing apparatus and a program.

### Background Art

Various items or services are currently sold in various stores. In such a situation, various services for assisting a user in purchasing items or services are proposed.

As a service for assisting in purchasing items, Patent Literature 1 discloses that information is exchanged between communication apparatuses and recommendation information is generated on the basis of the exchanged information.

### Citation List

### Patent Literature

Patent Literature 1: JP 2009-245219A

### Disclosure of Invention

### Technical Problem

In the technology disclosed in Patent Literature 1, although opportunities to purchase various items are given to a user, it is impossible to prevent the user from forgetting to purchase items. In view of this, the present disclosure proposes an information processing apparatus and a program, each of which is capable of preventing a user from forgetting to purchase items.

### Solution to Problem

According to the present disclosure, there is provided an information processing apparatus including: a processing unit configured to, in a case where a predetermined signal wirelessly transmitted from an external apparatus is detected, cause communication to be established with the external apparatus and cause purchase condition information indicating a purchase condition of one or both of an item and a service to be transmitted to the external apparatus via the communication established with the external apparatus.

Moreover, according to the present disclosure, there is provided a program for causing a computer to achieve a function of, in a case where a predetermined signal wirelessly transmitted from an external apparatus is detected, causing communication to be established with the external apparatus and causing purchase condition information indicating a purchase condition of one or both of an item and a service to be transmitted to the external apparatus via the communication established with the external apparatus.

Moreover, according to the present disclosure, there is provided an information processing apparatus including: a processing unit configured to determine whether a purchase condition of one or both of an item and a service indicated by purchase condition information that an external apparatus transmits in response to detection of a predetermined signal satisfies a set selling condition and perform processing regarding selling on the basis of a result of the determination.

### Advantageous Effects of Invention

As described above, according to the present disclosure, it is possible to prevent a user from forgetting to purchase items.

Note that the effects described above are not necessarily limitative. With or in the place of the above effects, there may be achieved any one of the effects described in this specification or other effects that may be grasped from this specification.

### Brief Description of Drawings

FIG. 1 is a diagram schematically showing a purchase system according to an embodiment of the present disclosure.
FIG. 2 is a diagram showing an example of a process in which communication is established between a wireless terminal and a peripheral apparatus according to an embodiment of the present disclosure.
FIG. 3 is a block diagram showing an example of a functional configuration of a smartphone according to an embodiment of the present disclosure.
FIG. 4 is a diagram showing an example of a hardware configuration of a smartphone according to an embodiment of the present disclosure.
FIG. 5 is a block diagram showing an example of a functional configuration of a peripheral apparatus according to an embodiment of the present disclosure.
FIG. 6 is a diagram showing an example of a hardware configuration of a peripheral apparatus according to an embodiment of the present disclosure.
FIG. 7 is a block diagram showing an example of a functional configuration of a wireless terminal according to an embodiment of the present disclosure.
FIG. 8 is a diagram showing an example of a hardware configuration of a wireless terminal according to an embodiment of the present disclosure.
FIG. 9 is a block diagram showing an example of a functional configuration of a server according to an embodiment of the present disclosure.
FIG. 10 is a diagram showing an example of a hardware configuration of a server according to an embodiment of the present disclosure.
FIG. 11 is a diagram showing an example of a setting screen of a purchase condition in an embodiment of the present disclosure.
FIG. 12 is a diagram showing an example of a setting screen of a purchase condition in an embodiment of the present disclosure.
FIG. 13 is a diagram showing an example of a purchase condition in an embodiment of the present disclosure.
FIG. 14 is a diagram showing an example of a purchase condition in an embodiment of the present disclosure.
FIG. 15 is a diagram showing an example of a purchase condition in an embodiment of the present disclosure.
FIG. 16 is a diagram showing an example of a purchase condition in an embodiment of the present disclosure.
FIG. 17 is a diagram showing an example of a purchase condition in an embodiment of the present disclosure.
FIG. 18 is a diagram showing an example of information transmitted to a wireless terminal from a peripheral apparatus in an embodiment of the present disclosure.
FIG. 19 is a diagram showing an example of an information processing method in an embodiment of the present disclosure.
FIG. 20 is a diagram showing an example of an information processing method in an embodiment of the present disclosure.
FIG. 21 is a diagram showing an example of a method of setting the next purchase date in an embodiment of the present disclosure.
FIG. 22 is a diagram showing an example of a purchase condition where information regarding the next purchase date in an embodiment of the present disclosure is set.
FIG. 23 is a diagram showing an example of a method of setting the next purchase date in an embodiment of the present disclosure.
FIG. 24 is a diagram showing an example of an information processing method in an embodiment of the present disclosure.
FIG. 25 is a diagram showing an example of an information processing method in an embodiment of the present disclosure.

### Mode(s) for Carrying Out the Invention

Hereinafter, (a) preferred embodiment (s) of the present disclosure will be described in detail with reference to the appended drawings. Note that, in this specification and the appended drawings, structural elements that have substantially the same function and structure are denoted with the same reference numerals, and repeated explanation of these structural elements is omitted.

Note that description will be provided in the following order.
1. Overview of purchase system
2. Configurations of apparatuses constituting purchase system
3. Method of setting purchase condition
4. Information processing method in purchase system
5. Supplement
6. Conclusion

### <1. Overview of purchase system>

An embodiment of the present disclosure relates to a purchase system. First, an overview of a purchase system according to an embodiment of the present disclosure will be described.

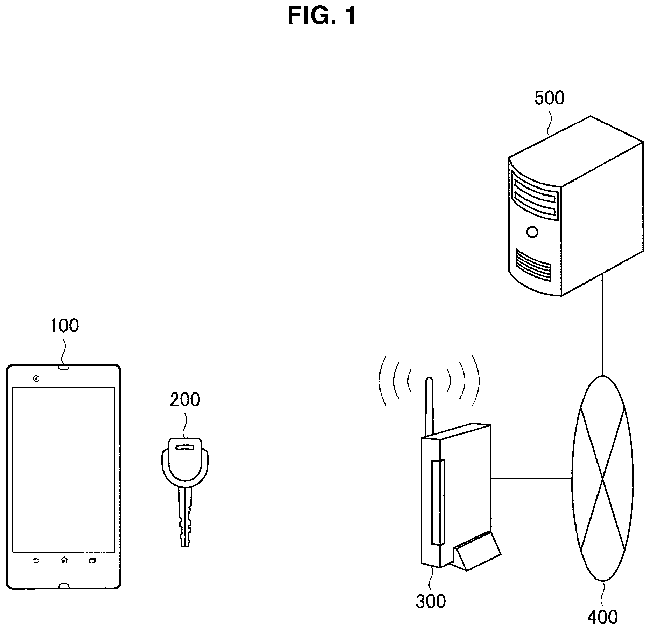

FIG. 1 is a diagram showing a configuration of the purchase system according to the embodiment of the present disclosure. As shown in FIG. 1, the purchase system of the present embodiment includes a smartphone 100, a peripheral apparatus 200, a wireless terminal 300, a network 400, and a server 500. Herein, the smartphone 100, the peripheral apparatus 200, the wireless terminal 300, and the server 500 are examples of an information processing apparatus that executes an information processing method of the present disclosure.

The smartphone 100 and the peripheral apparatus 200 are possessed by a user, and the wireless terminal 300 and the server 500 are managed by a store that sells items or services. The wireless terminal 300 is installed in the store, and the server 500 stores information regarding the items or the services that the store sells. As shown in FIG. 1, the server 500 is connected to the wireless terminal 300 via the network 400. Further, the server 500 may be installed in the store or may be installed outside the store.

In the purchase system of the present embodiment, purchase condition information regarding a purchase condition of one or both of an item and a service, which are set by the smartphone 100, is transferred to the peripheral apparatus 200, and the peripheral apparatus 200 stores the purchase condition. The purchase condition information includes information regarding an item or a service that the user desires to purchase. The purchase condition may be, for example, information indicating that "a shampoo is purchased in a case where the shampoo is 1,000 yen or less". Further, the peripheral apparatus 200 may be, for example, an apparatus that is frequently carried by the user, such as a key. However, as a matter of course, the peripheral apparatus 200 is not limited to a key.

When the peripheral apparatus 200 is moved by being carried by the user and the peripheral apparatus 200 enters a communicable range in which the peripheral apparatus 200 can detect a predetermined signal transmitted from the wireless terminal 300, processing for establishing connection between the peripheral apparatus 200 and the wireless terminal 300 is started. This communication between the peripheral apparatus 200 and the wireless terminal 300 is established after signals for establishing the connection between the peripheral apparatus 200 and the wireless terminal 300 are exchanged. Herein, the predetermined signal transmitted by the wireless terminal 300 may include identification information indicating being compatible with the purchase system of the present embodiment or may include identification information indicating a specified store or selling agency. The peripheral apparatus 200 may be configured to establish communication with the wireless terminal 300 in a case where the peripheral apparatus 200 detects the above-mentioned predetermined signal.

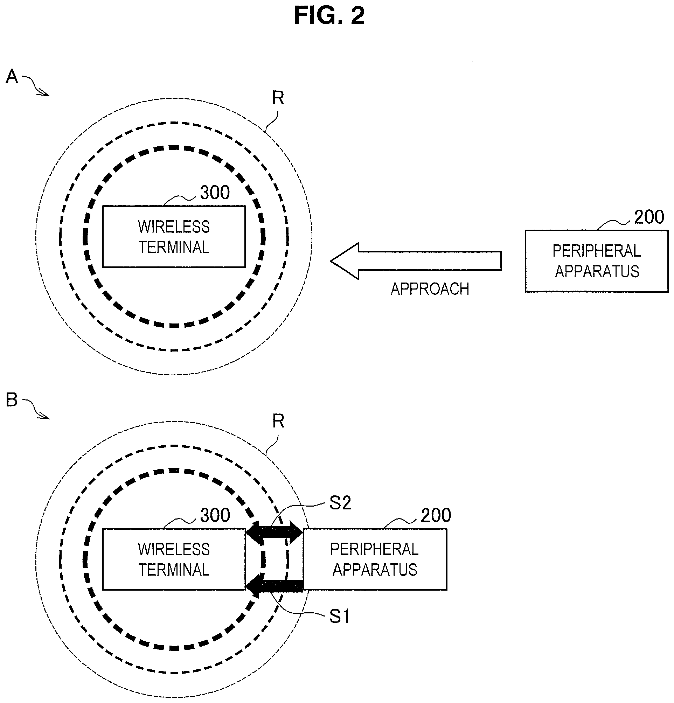

FIG. 2 is a diagram showing a process in which communication is established between the peripheral apparatus 200 and the wireless terminal 300. FIG. 2 shows, as an example, a process in which communication between the peripheral apparatus 200 and the wireless terminal 300 is established by using Bluetooth low energy (BLE). The letter "R" shown in FIG. 2 indicates an example of a communicable range in which the wireless terminal 300 can perform communication.

The wireless terminal 300 regularly or irregularly broadcasts the above-mentioned predetermined signal including the identification information indicating being compatible with the purchase system of the present embodiment or the identification information indicating a specified store or selling agency. Further, the predetermined signal may include identification information for identifying the wireless terminal 300.

Then, when the peripheral apparatus 200 enters the communicable range R of the wireless terminal 300 because, for example, the user who possesses the peripheral apparatus 200 moves, the peripheral apparatus 200 receives the signal broadcasted from the wireless terminal 300 (S1 in FIG. 2). When the peripheral apparatus 200 receives the information broadcasted from the wireless terminal 300, the peripheral apparatus 200 detects the wireless terminal 300 as an apparatus that can be a target to communicate. Further, by detecting the identification information indicating being compatible with the purchase system or the identification information indicating a specified store or selling agency from the received predetermined signal, the peripheral apparatus 200 may determine whether to perform the following processing for establishing communication.

Next, processing for establishing communication such as pairing is performed between the peripheral apparatus 200 and the wireless terminal 300 (S2 in FIG. 2). Then, in a case where the processing for establishing communication is normally completed (e.g. in a case where pairing is normally performed), communication between the peripheral apparatus 200 and the wireless terminal 300 is established.

Note that the purchase system according to the present embodiment may include the plurality of peripheral apparatuses 200 and/or the plurality of wireless terminals 300. Further, in the above-mentioned example, BLE is used as a communication method. However, in the purchase system of the present embodiment, another short-range wireless method may be used, such as Wi-Fi or Zigbee (registered trademark).

Referring back to FIG. 1, the purchase system of the present embodiment will be described. As shown in FIG. 2, when communication between the peripheral apparatus 200 and the wireless terminal 300 is established, the peripheral apparatus 200 transmits the stored purchase condition information regarding the purchase condition to the wireless terminal 300 installed in the store.

The wireless terminal 300 that has received the purchase condition information transmits the purchase condition information to the server 500 via the network 400. The server 500 that has received the purchase condition information from the wireless terminal 300 compares the purchase condition included in the received purchase condition information with a stored selling condition of the item or the service. Then, in a case where the server 500 determines that the purchase condition satisfies the selling condition or the selling condition satisfies the purchase condition, the server 500 performs processing regarding selling of the item or the service.

According to the above-mentioned purchase system of the present embodiment, because the user sets a purchase condition of an item and/or a service in the peripheral apparatus 200 in advance, the item or the service is purchased on the basis of the set purchase condition when the user passes by a store or enters the store. This prevents the user from forgetting to purchase the item or the service.

### <2. Configurations of apparatuses constituting purchase system>

In the above description, the overview of the purchase system of the present embodiment has been described. Hereinafter, a configuration of each apparatus constituting the purchase system of the present embodiment will be described.

### (2-1. Functional configuration of smartphone 100)

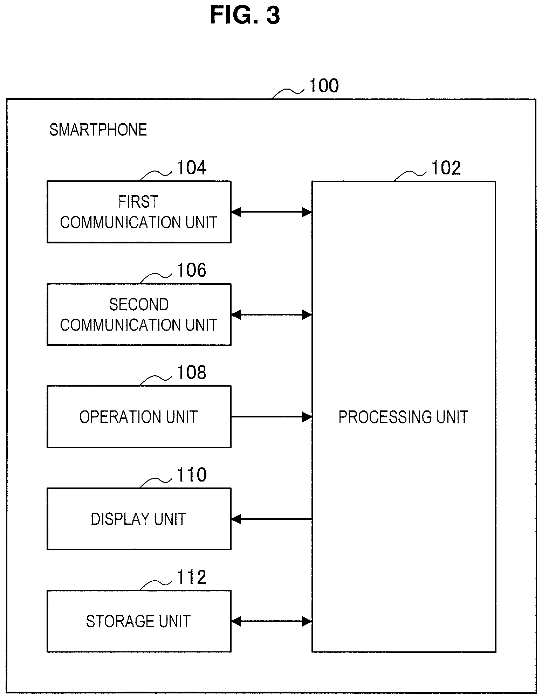

FIG. 3 is a block diagram showing an example of a configuration of the smartphone 100 capable of performing processing regarding an information processing method of the present embodiment. The smartphone 100 includes, for example, a processing unit 102, a first communication unit 104, a second communication unit 106, an operation unit 108, a display unit 110, and a storage unit 112.

The processing unit 102 processes a signal from each configuration of the smartphone 100. For example, the processing unit 102 performs a decoding process of a signal transmitted from the first communication unit 104 or the second communication unit 106 and extracts data. Further, the processing unit 102 may process a signal from the operation unit 108 to issue an instruction to an application executed in the processing unit 102. Further, the processing unit 102 may read data from the storage unit 112, generate image data on the basis of the read data, and transmit an image signal on the basis of the generated image data to the display unit 110.

The first communication unit 104 is a communication unit for connecting the smartphone 100 and an external network and may perform communication by using, for example, a communication method prescribed by the Third Generation Partnership Project (3GPP) or 3GPP2. The first communication unit 104 may perform communication by using a communication method such as W-CDMA, Long Term Evolution (LTE), or CDMA2000. Note that the above-mentioned communication methods are merely examples, and the communication method of the first communication unit 104 is not limited thereto.

The second communication unit 106 is a communication unit that performs short-range wireless communication with an external apparatus and may perform communication by using, for example, a communication method (e.g. Bluetooth (registered trademark)) prescribed by the IEEE 802 LAN/MAN Standards Committee. Further, the second communication unit 106 may perform communication by using a communication method such as Wi-Fi. Note that the above-mentioned communication methods are merely examples, and the communication method of the second communication unit 106 is not limited thereto.

The operation unit 108 accepts an operation with respect to the smartphone 100 from the user. The user operates, for example, an application executed in the smartphone 100 by operating the operation unit 108. Further, the user sets various kinds of functions of the smartphone 100 by operating the operation unit 108.

The display unit 110 is used to display an image. For example, the display unit 110 displays an image regarding an application executed in the smartphone 100. The storage unit 112 stores programs such as an application and an operating system executed in the smartphone 100.

### (2-2. Hardware configuration of smartphone 100)

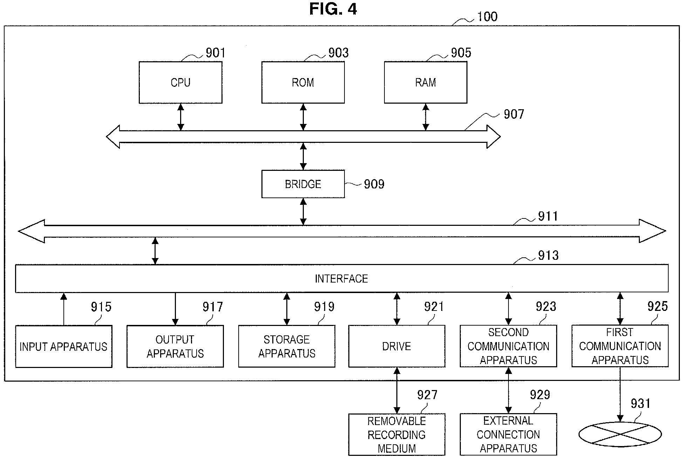

Hereinafter, a hardware configuration of the smartphone 100 according to the embodiment of the present disclosure will be described in detail with reference to FIG. 4. FIG. 4 is a block diagram for describing the hardware configuration of the smartphone 100 according to the embodiment of the present disclosure.

The smartphone 100 mainly includes a CPU 901, a ROM 903, and a RAM 905. The smartphone 100 further includes a host bus 907, a bridge 909, an external bus 911, an interface 913, an input apparatus 915, an output apparatus 917, a storage apparatus 919, a drive 921, a second communication apparatus 923, and a first communication apparatus 925.

The CPU 901 functions as a main processing apparatus and a control apparatus, and controls all or some operations of the smartphone 100 according to various kinds of programs recorded in the ROM 903, the RAM 905, the storage apparatus 919, or a removable recording medium 927. Note that the CPU 901 may include the function of the processing unit 102. The ROM 903 stores a program, an operation parameter, or the like used by the CPU 901. The RAM 905 primarily stores a program used by the CPU 901, a parameter that appropriately changes in execution of a program, or the like. The above-mentioned components are connected with one another by the host bus 907 including an internal bus such as a CPU bus.

The host bus 907 is connected to the external bus 911 such as a peripheral component interconnect/interface (PCI) bus through the bridge 909.

The input apparatus 915 is, for example, operating means that the user operates, such as a capacitive or resistive touchscreen, a button, a switch, and a jog dial. Further, for example, the input apparatus 915 includes an input control circuit that generates an input signal on the basis of information input by the user using the operating means, and outputs the input signal to the CPU 901. The user can input various kinds of data to the smartphone 100 or instruct the smartphone 100 to perform a processing operation by operating the input apparatus 915. Note that the input apparatus 915 may include the function of the operation unit 108.

The output apparatus 917 includes an apparatus capable of visually or acoustically notifying the user of the acquired information. As such an apparatus, there are a display apparatus such as a liquid crystal display apparatus, an EL display apparatus or a lamp, or an audio output apparatus such as a speaker or a headphone, and the like. For example, the output apparatus 917 outputs a result obtained by various kinds of processes performed by the smartphone 100. Specifically, the display apparatus displays a result obtained by various kinds of processes performed by the smartphone 100 in the form of text or an image. Meanwhile, the audio output apparatus converts an audio signal including reproduced audio data, acoustic data, or the like into an analogue signal, and outputs the analogue signal. Note that a display apparatus of the output apparatus 917 may include the function of the display unit 110.

The storage apparatus 919 is an apparatus to store data used in the smartphone 100. For example, the storage apparatus 919 includes a magnetic storage device such as a hard disk drive (HDD), a semiconductor storage device, an optical storage device, a magneto optical storage device, or the like. The storage apparatus 919 stores a program executed by the CPU 901, various kinds of data, various data obtained externally, and the like. Note that the storage apparatus 919 may include the function of the storage unit 112.

The drive 921 is a recording medium reader/writer, and is equipped in or attached to the smartphone 100. The drive 921 reads information stored in the removable recording medium 927 mounted thereon such as a magnetic disk, an optical disc, a magneto optical disc, or a semiconductor memory, and outputs the read information to the RAM 905. Further, the drive 921 can write a record in the removable recording medium 927 mounted thereon such as a magnetic disk, an optical disk, a magneto optical disk, or a semiconductor memory. For example, the removable recording medium 927 is a DVD medium, an HD-DVD medium, a Blu-ray (a registered trademark) medium, or the like. Further, the removable recording medium 927 may be a Compact Flash (CF) (a registered trademark), a flash memory, a Secure Digital (SD) memory card, or the like. Furthermore, for example, the removable recording medium 927 may be an integrated circuit (IC) card equipped with a non-contact type IC chip, an electronic device, or the like.

The second communication apparatus 923 establishes communication with an external connection apparatus 929 and is therefore used to exchange data with the external connection apparatus. Examples of the second communication apparatus 923 encompass an IEEE 802.11 port, an IEEE 802.15 port, and the like. The smartphone 100 is connected to the external connection apparatus 929 by this second communication apparatus and therefore directly acquires various kinds of data from the external connection apparatus 929 and transmits various kinds of data to the external connection apparatus 929. Note that an example of the external connection apparatus 929 is the peripheral apparatus 200.

The first communication apparatus 925 is, for example, a communication interface including a communication device for use in connection to the communication network 931 and the like. The first communication apparatus 925 is, for example, a modem circuit that operates in conformity with a standard prescribed by 3GPP. Communication methods that conform to the standard prescribed by 3GPP are, for example, W-CDMA, LTE, and the like. The first communication apparatus 925 can, for example, transmit/receive a signal and the like to/from the Internet or a network of a telecommunications carrier in accordance with, for example, a predetermined protocol such as TCP/IP. Further, the communication network 931 connected to the first communication apparatus 925 includes a wirelessly connected network and the like and may be, for example, the Internet, a network of a telecommunications carrier, or the like.

### (2-3. Functional configuration of peripheral apparatus 200)

In the above description, the function and the hardware configuration of the smartphone 100 of the present embodiment have been described. Hereinafter, a function and a hardware configuration of the peripheral apparatus 200 of the present embodiment will be described.

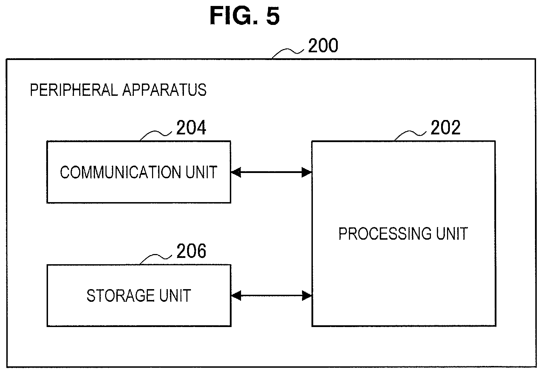

FIG. 5 is a block diagram showing an example of the configuration of the peripheral apparatus 200 capable of performing processing regarding the information processing method of the present embodiment. The peripheral apparatus 200 includes, for example, a processing unit 202, a communication unit 204, and a storage unit 206.

The processing unit 202 processes a signal from each configuration of the peripheral apparatus 200. For example, the processing unit 202 performs a decoding process of a signal transmitted from the communication unit 204 and extracts data. Further, the processing unit 202 may read data from the storage unit 206 and transmit the read data to the communication unit 204.

The communication unit 204 is a communication unit that performs short-range wireless communication with an external apparatus and may perform communication by using, for example, a communication method (e.g. Bluetooth (registered trademark)) prescribed by the IEEE 802 LAN/MAN Standards Committee. Further, the communication unit 204 may perform communication by using a communication method such as Wi-Fi. Note that the above-mentioned communication methods are merely examples, and the communication method of the communication unit 204 is not limited thereto. The storage unit 206 stores various kinds of data and may store, for example, data transmitted from the smartphone 100.

### (2-4. Hardware configuration of peripheral apparatus 200)

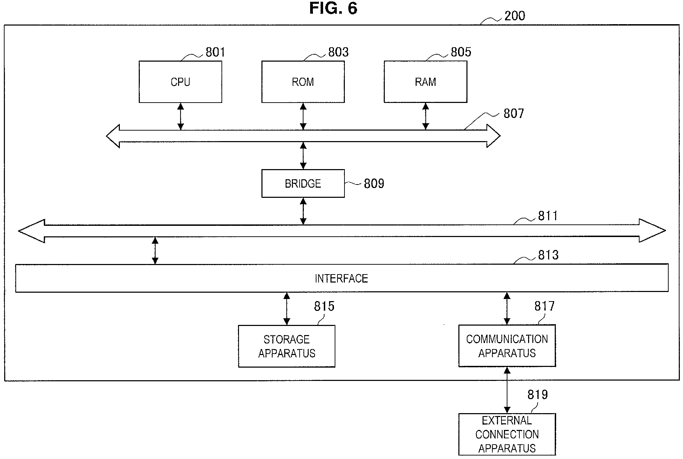

Hereinafter, a hardware configuration of the peripheral apparatus 200 according to the embodiment of the present disclosure will be described in detail with reference to FIG. 6. FIG. 6 is a block diagram for describing the hardware configuration of the peripheral apparatus 200 according to the embodiment of the present disclosure.

The peripheral apparatus 200 mainly includes a CPU 801, a ROM 803, and a RAM 805. Further, the peripheral apparatus 200 further includes a host bus 807, a bridge 809, an external bus 811, an interface 813, a storage apparatus 815, and a communication apparatus 817.

The CPU 801 functions as a main processing apparatus and a control apparatus, and controls all or some operations of the peripheral apparatus 200 according to various kinds of programs recorded in the ROM 803, the RAM 805. Note that the CPU 801 may include the function of the processing unit 202. The ROM 803 stores a program, an operation parameter, or the like used by the CPU 801. The RAM 805 primarily stores a program used by the CPU 801, a parameter that appropriately changes in execution of a program, or the like. The above-mentioned components are connected with one another by the host bus 807 including an internal bus such as a CPU bus.

The storage apparatus 815 is an apparatus to store data used in the peripheral apparatus 200. For example, the storage apparatus 815 includes a magnetic storage device, a semiconductor storage device, an optical storage device, a magneto optical storage device, or the like. The storage apparatus 815 stores a program executed by the CPU 801, various kinds of data, various data obtained externally, and the like. Note that the storage apparatus 815 may include the function of the storage unit 206.

The communication apparatus 817 establishes communication with an external connection apparatus 819 and is therefore used to exchange data with the external connection apparatus 819. Examples of the communication apparatus 817 encompass an IEEE 802.11 port, an IEEE 802.15 port, and the like. The peripheral apparatus 200 is connected to the external connection apparatus 819 by this communication apparatus 817 and therefore directly acquires various kinds of data from the external connection apparatus 819 and transmits various kinds of data to the external connection apparatus 819. Note that an example of the external connection apparatus 819 is the smartphone 100 or the wireless terminal 300.

### (2-5. Functional configuration of wireless terminal 300)

In the above description, the function and the hardware configuration of the peripheral apparatus 200 of the present embodiment have been described. Hereinafter, a function and a hardware configuration of the wireless terminal 300 of the present embodiment will be described.

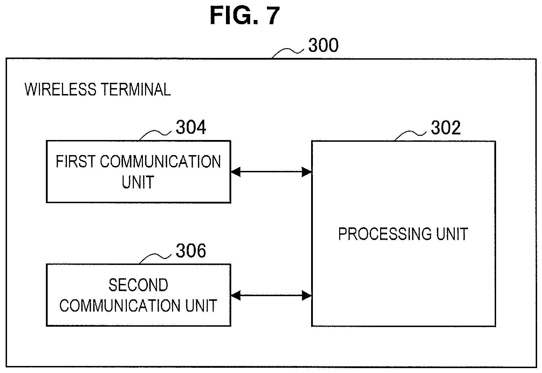

FIG. 7 is a block diagram showing an example of the configuration of the wireless terminal 300 capable of performing processing regarding the information processing method of the present embodiment. The wireless terminal 300 includes, for example, a processing unit 302, a first communication unit 304, and a second communication unit 306.

The processing unit 302 processes a signal from each configuration of the wireless terminal 300. For example, the processing unit 302 performs a decoding process of a signal transmitted from the first communication unit 304 or the second communication unit 306 and extracts data. Further, the processing unit 302 encodes data transmitted from the first communication unit 304 or the second communication unit 306.

The first communication unit 304 is a communication unit that performs communication with an external apparatus via wired communication or wireless communication and may perform communication by using, for example, a communication method that conforms to Ethernet. The second communication unit 306 is a communication unit that performs short-range wireless communication with an external apparatus and may perform communication by using, for example, a communication method (e.g. Bluetooth (registered trademark)) prescribed by the IEEE 802 LAN/MAN Standards Committee. Further, the second communication unit 306 may perform communication by using a communication method such as Wi-Fi. Note that the above-mentioned communication methods are merely examples, and the communication method of the first communication unit 304 and the second communication unit 306 is not limited thereto.

### (2-6. Hardware configuration of wireless terminal 300)

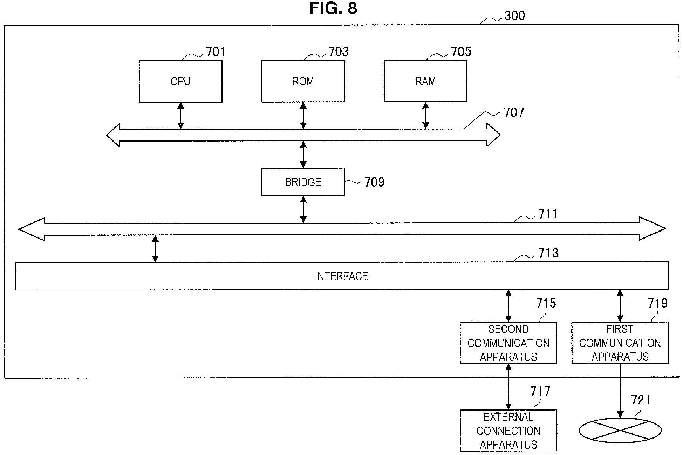

Hereinafter, a hardware configuration of the wireless terminal 300 according to the embodiment of the present disclosure will be described in detail with reference to FIG. 8. FIG. 8 is a block diagram for describing the hardware configuration of the wireless terminal 300 according to the embodiments of the present disclosure.

The wireless terminal 300 mainly includes a CPU 701, a ROM 703, and a RAM 705. Further, the wireless terminal 300 further includes a host bus 707, a bridge 709, an external bus 711, an interface 713, a second communication apparatus 715, and a first communication apparatus 719.

The CPU 701 functions as a main processing apparatus and a control apparatus, and controls all or some operations of the wireless terminal 300 according to various kinds of programs recorded in the ROM 703, the RAM 705. Note that the CPU 701 may include the function of the processing unit 302. The ROM 703 stores a program, an operation parameter, or the like used by the CPU 701. The RAM 705 primarily stores a program used by the CPU 701, a parameter that appropriately changes in execution of a program, or the like. The above-mentioned components are connected with one another by the host bus 707 including an internal bus such as a CPU bus.

The second communication apparatus 715 establishes communication with an external connection apparatus 717 and is therefore used to exchange data with the external connection apparatus 717. Examples of the second communication apparatus 715 encompass an IEEE 802.11 port, an IEEE 802.15 port, and the like. The wireless terminal 300 is connected to the external connection apparatus 717 by this second communication apparatus 715 and therefore directly acquires various kinds of data from the external connection apparatus 717 and transmits various kinds of data to the external connection apparatus 717. Note that an example of the external connection apparatus 717 is the peripheral apparatus 200.

The first communication apparatus 719 is, for example, a communication interface including a communication device for use in connection to the communication network 721 and the like. The first communication apparatus 719 is, for example, a communication modem of a wired or wireless LAN or the like. This first communication apparatus 719 can transmit/receive a signal or the like to/from, for example, the Internet or another communication apparatus in accordance with, for example, a predetermined protocol such as TCP/IP.

### (2-7. Functional configuration of server 500)

In the above description, the function and the hardware configuration of the wireless terminal 300 of the present embodiment have been described. Hereinafter, a function and a hardware configuration of the server 500 of the present embodiment will be described.

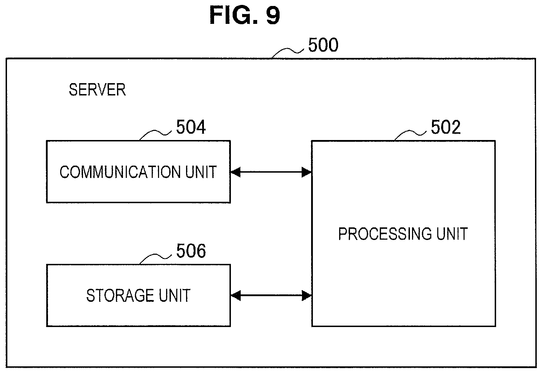

FIG. 9 is a block diagram showing an example of the configuration of the server 500 capable of performing processing regarding the information processing method of the present embodiment. The server 500 includes, for example, a processing unit 502, a communication unit 504, and a storage unit 506.

The processing unit 502 processes a signal from each configuration of the server 500. For example, the processing unit 502 performs a decoding process of a signal transmitted from the communication unit 504 and extracts data. Further, the processing unit 502 reads data from the storage unit 506 and processes the read data.

The communication unit 504 is a communication unit that communicates with an external apparatus via wired communication or wireless communication and may perform communication by using, for example, a communication method that conforms to Ethernet. The storage unit 506 stores various kinds of data used by the processing unit 502.

### (2-8. Hardware configuration of server 500)

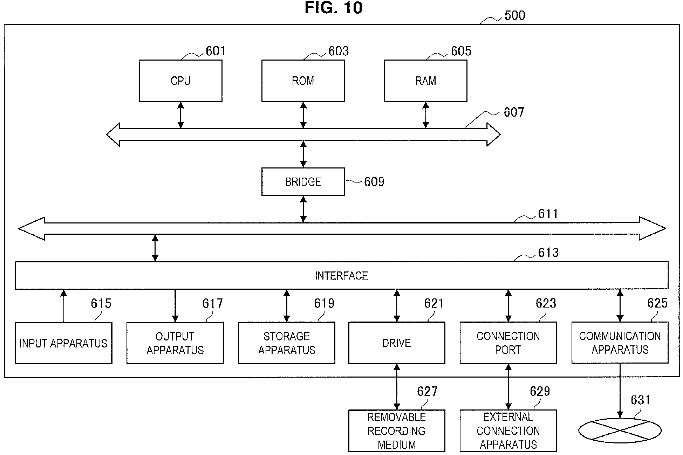

Hereinafter, a hardware configuration of the server 500 according to the embodiment of the present disclosure will be described in detail with reference to FIG. 10. FIG. 5 is a block diagram for describing the hardware configuration of the server 500 according to the embodiment of the present disclosure.

The server 500 mainly includes a CPU 601, a ROM 603, and a RAM 605. The server 500 further includes a host bus 607, a bridge 609, an external bus 611, an interface 613, an input apparatus 615, an output apparatus 617, a storage apparatus 619, a drive 621, a connection port 623, and a communication apparatus 625.

The CPU 601 functions as a main processing apparatus and a control apparatus, and controls all or some operations of the server 500 according to various kinds of programs recorded in the ROM 603, the RAM 605, the storage apparatus 619, or a removable recording medium 627. Note that the CPU 601 may include the function of the processing unit 502. The ROM 603 stores a program, an operation parameter, or the like used by the CPU 601. The RAM 605 primarily stores a program used by the CPU 601, a parameter that appropriately changes in execution of a program, or the like. The above-mentioned components are connected with one another by the host bus 607 including an internal bus such as a CPU bus.

The input apparatus 615 is, for example, operating means that the user operates, such as a mouth, a keyboard, a touchscreen, a button, a switch, and a lever. Further, for example, the input apparatus 615 includes an input control circuit that generates an input signal on the basis of information input by the user using the operating means, and outputs the input signal to the CPU 601. The user can input various kinds of data to the server 500 or instruct the server 500 to perform a processing operation by operating the input apparatus 615.

The output apparatus 617 includes an apparatus capable of visually or acoustically notifying the user of the acquired information. As such an apparatus, there are a display apparatus such as a CRT display apparatus, a liquid crystal display apparatus, a plasma display apparatus, an EL display apparatus or a lamp, an audio output apparatus such as a speaker or a headphone, a printer apparatus, a mobile phone, a facsimile machine, and the like. For example, the output apparatus 617 outputs a result obtained by various kinds of processes performed by the server 500. Specifically, the display apparatus displays a result obtained by various kinds of processes performed by the server 500 in the form of text or an image. Meanwhile, the audio output apparatus converts an audio signal including reproduced audio data, acoustic data, or the like into an analogue signal, and outputs the analogue signal.

The storage apparatus 619 is a data storage apparatus configured as an exemplary storage unit 506 of the server 500. For example, the storage apparatus 619 includes a magnetic storage device such as a hard disk drive (HDD), a semiconductor storage device, an optical storage device, a magneto optical storage device, or the like. The storage apparatus 619 stores a program executed by the CPU 901, various kinds of data, various data obtained externally, and the like. Note that the storage apparatus 619 may include the function of the storage unit 506.

The drive 621 is a recording medium reader/writer, and is equipped in or attached to the server 500. The drive 621 reads information stored in the removable recording medium 627 mounted thereon such as a magnetic disk, an optical disc, a magneto optical disc, or a semiconductor memory, and outputs the read information to the RAM 605. Further, the drive 621 can write a record in the removable recording medium 627 mounted thereon such as a magnetic disk, an optical disk, a magneto optical disk, or a semiconductor memory. For example, the removable recording medium 627 is a DVD medium, an HD-DVD medium, a Blu-ray (a registered trademark) medium, or the like. Further, the removable recording medium 627 may be a Compact Flash (CF) (a registered trademark), a flash memory, a Secure Digital (SD) memory card, or the like. Furthermore, for example, the removable recording medium 627 may be an integrated circuit (IC) card equipped with a non-contact type IC chip, an electronic device, or the like.

The connection port 623 is a port for connecting a device directly with the server 500. As an example of the connection port 623, there are a Universal Serial Bus (USB) port, an IEEE1394 port, a Small Computer System Interface (SCSI) port, and the like. As another example of the connection port 623, there are an RS-232C port, an optical audio terminal, a High-Definition Multimedia Interface (HDMI) (a registered trademark), and the like. As the external connection apparatus 629 is connected to the connection port 623, the server 500 acquires various kinds of data directly from the external connection apparatus 629 or provides various kinds of data to the external connection apparatus 629.

For example, the communication apparatus 625 is a communication interface including a communication device or the like used for a connection with a communication network 631. For example, the communication apparatus 625 is a communication card for a wired or wireless local area network (LAN), or wireless USB (WUSB). Further, the communication apparatus 625 may be an optical communication router, an asymmetric digital subscriber line (ADSL) router, various kinds of communication modems, or the like. For example, the communication apparatus 625 can transmit or receive a signal to or from the Internet or another communication apparatus, for example, according to a certain protocol such as TCP/IP. Further, the communication network 631 connected to the communication apparatus 625 includes a network connected in a wired or wireless manner, and may be, for example, the Internet, a domestic LAN, infrared ray communication, radio wave communication, satellite communication, or the like.

### <3. Method of setting purchase condition>

In the above description, the configuration of each apparatus constituting the purchase system of the present embodiment has been described. Hereinafter, there will be described a method of setting a purchase condition of an item or a service for use in the purchase system of the present embodiment. Note that, hereinafter, an example of a method of setting a purchase condition of an item will be described. However, a purchase condition regarding a service may be set by a similar method.

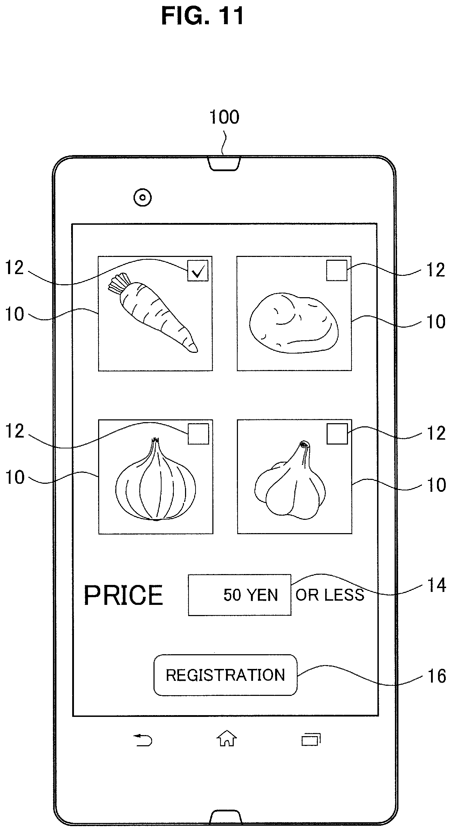

FIG. 11 is a diagram showing a setting screen of a purchase condition displayed on the smartphone 100. When an application or the like for the purchase system of the present embodiment is executed in the smartphone 100, the setting screen of the purchase condition shown in FIG. 11 is displayed.

The setting screen shown in FIG. 11 is a setting screen for setting a purchase condition of items (vegetables, in particular). Therefore, icons 10 indicating carrots, potatoes, onions, and garlic are displayed on the setting screen shown in FIG. 11. Further, a checkbox 12 indicating being selected is provided on an upper right part of each icon 10. Note that, as a matter of course, the items shown in FIG. 11 are merely examples, and items applied to the purchase system of the present embodiment are not limited thereto.

By operating the operation unit 108 of the smartphone 100, the user may select the displayed icon 10 or checkbox 12 and select a target to set a purchase condition. For example, in a case where the operation unit 108 is a touchscreen, the user may select a target to be set by tapping the icon 10 or the checkbox 12 of a target item. In FIG. 11, a check mark is placed in the checkbox 12 provided in the icon 10 of the carrot because the carrots are selected by the user.

The user selects the target to be set and then sets a purchase condition. For example, the user sets a purchase asking price of the target item as part of the purchase condition. In FIG. 11, a price setting box 14 for setting a purchase asking price of a target item is provided. In a case where the operation unit 108 is a touchscreen, the user taps the price setting box 14 and sets the purchase asking price of the target item by using a displayed virtual keyboard or the like.

The user inputs the purchase asking price of the target item and then taps a registration button 16. When the user taps the registration button 16, a purchase condition of the selected target item is set. Note that, in a case where the user sets the purchase condition regarding a plurality of items, the above-mentioned operation may be repeated.

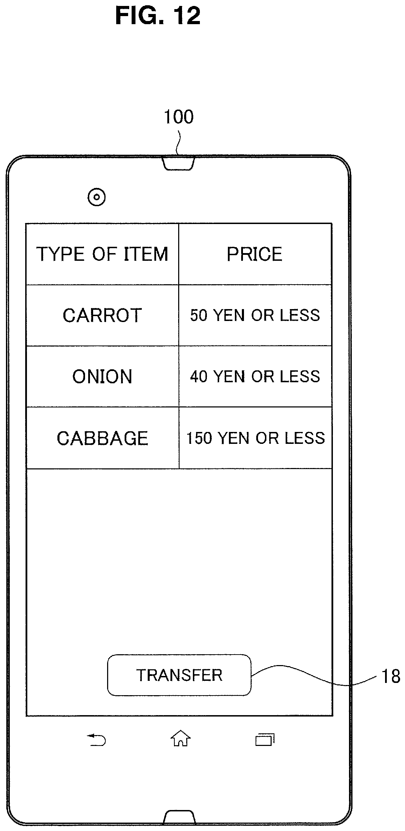

FIG. 12 is a diagram showing a confirmation screen that is displayed after the purchase condition is set on the setting screen in FIG. 11. FIG. 12 shows that the purchase condition regarding carrots, onions, and cabbages is set. In FIG. 12, it is understood that the purchase asking price of the target item is set as part of the purchase condition and, for example, a purchase condition in which a carrot is purchased in a case where a price thereof is 50 yen or less is set.

The user confirms the purchase condition on the confirmation screen shown in FIG. 12 and then taps a transfer button 18 to transfer purchase condition information regarding the purchase condition to the peripheral apparatus 200. Note that the purchase condition information is information including the above-mentioned purchase condition. Herein, in a case where the peripheral apparatus 200 is not connected to the smartphone 100, a display form of the transfer button 18 may be changed to indicate that the purchase condition information cannot be transferred. With this, the user can visually understand that the peripheral apparatus 200 is not connected to the smartphone 100.

The purchase condition information is transferred by an arbitrary communication method established between the smartphone 100 and the peripheral apparatus 200. For example, the purchase condition information may be transferred by using a short-range wireless communication such as Bluetooth (registered trademark). Note that, at this time, the storage unit 112 of the smartphone 100 may also store the set purchase condition.

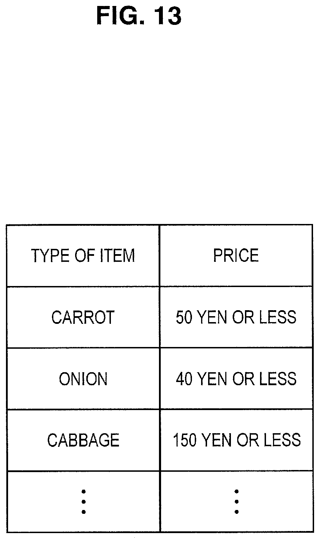

The peripheral apparatus 200 that has received the purchase conditions information from the smartphone 100 stores the purchase condition included in the received purchase condition information on the storage unit 206. FIG. 13 is a diagram showing an example of the purchase condition stored on the storage unit 112 of the smartphone 100 and the storage unit 206 of the peripheral apparatus 200. As shown in FIG. 13, the purchase condition stored on the storage unit 112 of the smartphone 100 and the storage unit 206 of the peripheral apparatus 200 includes information regarding items and information regarding prices of the items. In FIG. 13, the purchase asking price is set as part of the purchase condition, and there is set a purchase condition in which, in a case where a price of a carrot is 50 yen or less, in a case where a price of an onion is 40 yen or less, and in a case where a price of a cabbage is 150 yen or less, each item is purchased.

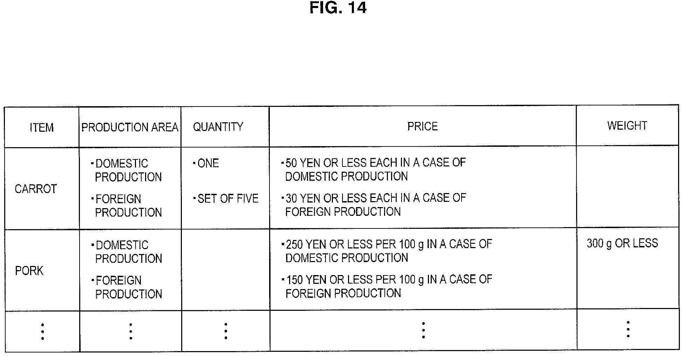

The purchase condition shown in FIG. 13 is merely an example, and the purchase condition may be set in more detail. FIG. 14 is a diagram showing an example where a "production area", a "quantity", a "price", and "weight" of an item are set as part of the purchase condition.

In the example shown in FIG. 14, regarding a production area of carrots, a condition in which the carrots are either produced domestically or produced in foreign countries is set as the purchase condition. Further, regarding a quantity of the carrots, a condition in which "the carrots are sold one by one" or "the carrots are sold in a set of five" is set as the purchase condition. Further, regarding a price of the carrots, a condition in which "in a case where the carrots are domestically produced, a price of each carrot is 50 yen or less" and a condition in which "in a case where the carrots are produced in foreign countries, a price of each carrot is 30 yen or less" are set as the purchase condition.

Further, the same applies to pork, and, regarding a production area, a condition in which the pork is either "domestically produced" or "produced in foreign countries" is set as the purchase condition. In addition, regarding a weight, in a case of the pork, a condition in which "a sold package is 300 g or less" is set as the purchase condition. Further, regarding a price thereof, a condition in which "in a case where the pork is domestically produced, the price per 100 g is 250 yen or less" and a condition in which "in a case where the pork is produced in foreign countries, the price per 100 g is 150 yen or less" are set as the purchase condition.

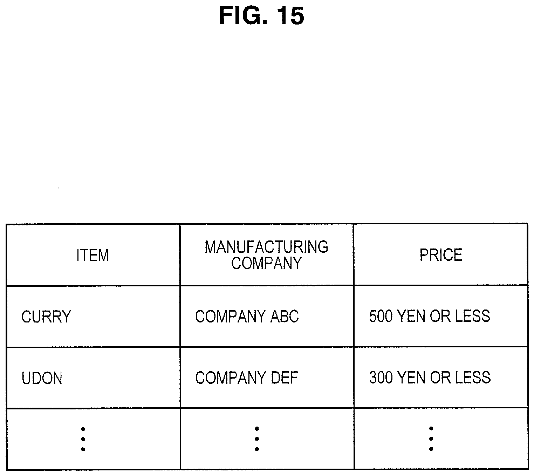

FIG. 15 is a diagram showing another example of the purchase condition. FIG. 15 shows an example where a purchase condition of items manufactured by manufacturing companies is set. FIG. 15 shows an example where a "manufacturing company" and a "price" of the items are set as part of the purchase condition.

In an example of curry shown in FIG. 15, regarding a manufacturing company, a "company ABC" is set as the purchase condition. Further, regarding a price thereof, a condition in which "the price is 500 yen or less" is set as the purchase condition. Further, in an example of Udon noodles, regarding a manufacturing company, a "company DEF" is set as the purchase condition. Further, regarding a price thereof, a condition in which "the price is 300 yen or less" is set as the purchase condition.

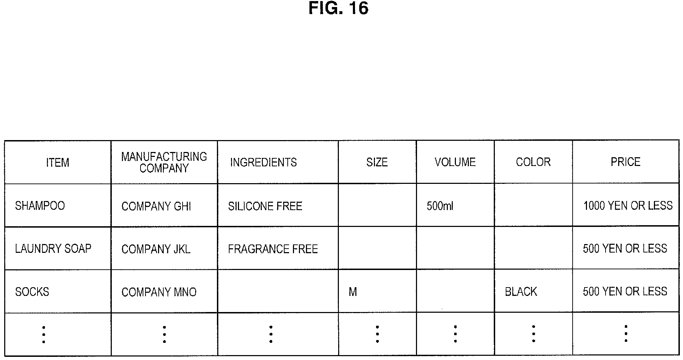

Next, a purchase condition regarding an item other than food will be described. FIG. 16 is a diagram showing an example of a purchase condition regarding items other than food. FIG. 16 shows an example where a "manufacturing company", "ingredients", a "size", a "volume", "color", and a "price" of the items are set as part of the purchase condition.

In an example of a shampoo shown in FIG. 16, regarding a manufacturing company, a "company GHI" is set as the purchase condition. Further, regarding ingredients thereof, "silicone free" is set as the purchase condition. Further, regarding a volume thereof, a condition in which "the volume is 500 ml" is set as the purchase condition. Further, regarding a price thereof, a condition in which "the price is 1,000 yen or less" is set as the purchase condition.

Further, in an example of a laundry soap, regarding a manufacturing company, a "company JKL" is set as the purchase condition. Further, regarding ingredients thereof, "fragrance free" is set as the purchase condition. Further, regarding a price thereof, a condition in which "the price is 500 yen or less" is set as the purchase condition.

Further, in an example of socks, regarding a manufacturing company, a "company MNO" is set as the purchase condition. Further, regarding a size thereof, a condition in which "the size is M" is set as the purchase condition. Further, regarding color thereof, a condition in which "the color is black" is set as the purchase condition. Further, regarding a price thereof, a condition in which "the price is 500 yen or less" is set as the purchase condition.

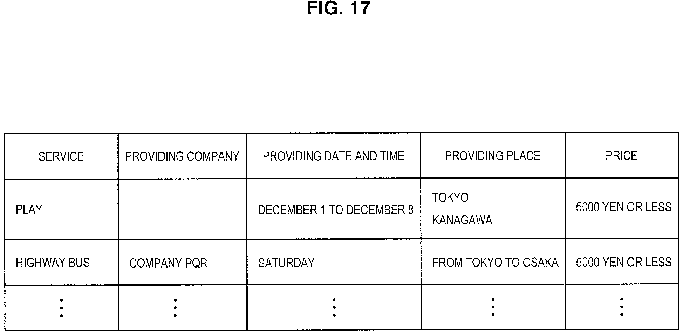

Next, a purchase condition regarding a service will be described. FIG. 17 is a diagram showing an example of a purchase condition regarding services. FIG. 17 shows an example where a "providing company", a "providing date and time", a "providing place", and a "price" of the services are set as part of the purchase condition.

Note that it is expected that a purchase condition of a play shown in FIG. 17 is set regarding a play of a predetermined program. In addition, in the example of the play, regarding a providing date and time, a condition in which "the providing date is between December 1 to December 8" is set as the purchase condition. Further, regarding a providing place thereof, a condition in which "the providing place is Tokyo or Kanagawa" is set as the purchase condition. Further, regarding a price thereof, "the price is 5000 yen or less" is set as the purchase condition.

Further, in an example of a highway bus, regarding a providing company, a condition in which "the providing company is the company PQR" is set as the purchase condition. Further, regarding a providing date and time thereof, a condition in which "the providing date is Saturday" is set as the purchase condition. Further, regarding a providing place thereof, a condition in which "the route is from Tokyo to Osaka" is set as the purchase condition. Further, regarding the price, a condition in which "the price is 5000 yen or less" is set as the purchase condition.

As described above, a purchase condition regarding items or services is set in detail, and therefore the user can efficiently purchase an item or a service that the user prefers. Note that the above-mentioned setting of the purchase condition is merely an example, and the whole purchase condition does not need to be set and part of the purchase condition may be set. At this time, a condition that is not set may be determined to be arbitrary.

### <4. Information processing method in purchase system>

### (4-1. Information transmitted by peripheral apparatus 200)

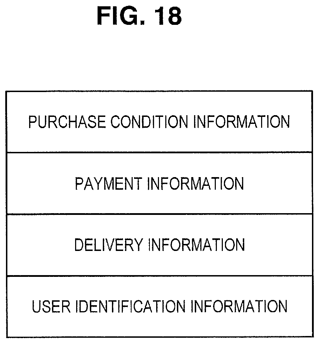

In the above description, the method of setting a purchase condition in the present embodiment has been described. Hereinafter, details of the information processing method in the purchase system of the present embodiment will be described. As described below, FIG. 18 is a diagram showing information transmitted from the peripheral apparatus 200 in the purchase system of the present embodiment.

As shown in FIG. 18, the peripheral apparatus 200 in the present embodiment stores purchase condition information, payment information, delivery information, and user identification information on the storage unit 206 and transmits each piece of the information to the wireless terminal 300 at an appropriate timing. Each piece of the information will be described below.

The purchase condition information shown in FIG. 18 is information including the purchase condition of the items or the services, which has been described with reference to FIGS. 13 to 17. The peripheral apparatus 200 may store one or both of such the purchase conditions of the items and services and may transmit one or both of the stored purchase conditions of the items and the services to the wireless terminal 300.

The payment information is information for use in payment for purchasing an item or a service included in the purchase condition information. The payment information may be, for example, information regarding digital currency or information regarding a credit card. Further, the information regarding digital currency may include, for example, peculiar identification information allocated to each user in each digital currency system, such as a Suica ID number or an Edy number, and may include balance information of digital currency. Further, the information regarding a credit card may include a credit card number.

The delivery information is information for use in delivery of an item when the item is purchased. Further, when a service is purchased, the delivery information may be used to deliver a ticket of the service. The delivery information may be, for example, an address of the user or an address or a store name of a convenience store specified by the user. Further, in a case where a ticket or the like is electronically delivered, the delivery information may be an e-mail address that the user possesses. Because the delivery information is transmitted, the user can receive an item purchased in the purchase system of the present embodiment at a specified destination.

The user identification information is information for use in a bonus service or the like of each store. In some cases, a store provides a bonus service in which a point(s) corresponding to a certain percentage of a purchase price is given to a purchaser. The user identification information may be identification information used to specify a user for such a point reward service.

### (4-2. Example of information processing method in present embodiment)

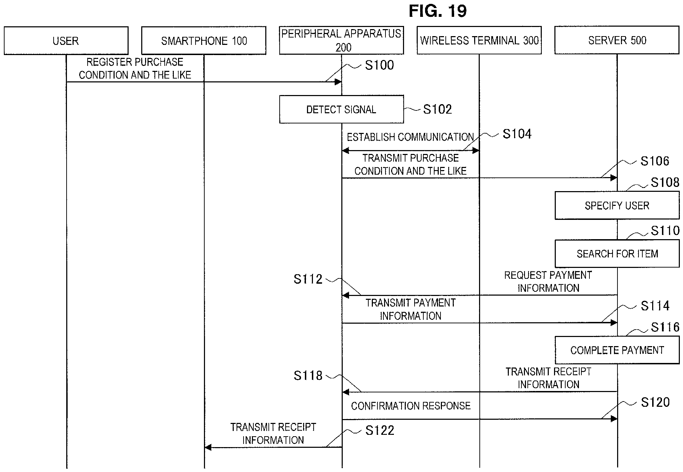

In the above description, the information transmitted from the peripheral apparatus 200 to the wireless terminal 300 in the present embodiment has been described. Hereinafter, an example of the information processing method in the present embodiment will be described. FIG. 19 is a diagram showing an example of the information processing method in the present embodiment. Note that, hereinafter, an example where an item is purchased will be described. However, an information processing method of purchasing a service is also achieved by an information processing method similar to the information processing method described below.

First, in S100, a user transmits purchase condition information and the like to the peripheral apparatus 200 via the smartphone 100 to register a purchase condition and the like. Herein, the user sets the purchase condition by using, for example, the method described above with reference to FIGS. 11 and 12 and transmits the purchase condition information including the set purchase condition to the peripheral apparatus 200 connected to the smartphone 100. The peripheral apparatus 200 that has received the purchase condition information stores the purchase condition included in the purchase condition information on the storage unit 206. Note that, at this time, the storage unit 112 of the smartphone 100 may also store the set purchase condition.

Further, the user may transmit not only the purchase condition but also the delivery information, the user identification information, and the like shown in FIG. 18 to the peripheral apparatus 200 via the smartphone 100. For example, payment information registered on an application included in the smartphone 100 may be transmitted to the peripheral apparatus 200. Further, an identification number or the like written on a card may be read by using an imaging apparatus included in the smartphone 100 and the read card number and the like may be transmitted to the peripheral apparatus 200 via the smartphone 100.

Further, the payment information stored on a chip included in the card may be read by using a near field communication (NFC) apparatus included in the smartphone 100, and the payment information may be transmitted to the peripheral apparatus 200 via the smartphone 100.

Further, the user may set the delivery information and the user identification information in advance by operating the operation unit 108 of the smartphone 100, and the delivery information and the user identification information set in advance may be transmitted to the peripheral apparatus 200 via the smartphone 100.

The peripheral apparatus 200 that has received the purchase condition information, the payment information, the delivery information, and the user identification information from the smartphone 100 stores the received purchase condition information, payment information, delivery information, and user identification information on the storage unit 206.

Next, in S102, the peripheral apparatus 200 detects a predetermined signal that is regularly or irregularly transmitted from the wireless terminal 300 installed in a store or the like. The predetermined signal transmitted by the wireless terminal 300 may include identification information for identifying the wireless terminal 300 installed in the store. Further, the predetermined signal transmitted by the wireless terminal 300 may include identification information indicating being compatible with the purchase system of the present embodiment and may include identification information indicating a specified store or selling agency.

Further, the wireless terminal 300 may transmit a signal by using a short-range wireless communication method such as Bluetooth (registered trademark) or Wi-Fi. As described above, because short-range wireless communication is used to transmit a signal from the wireless terminal 300, the peripheral apparatus 200 can detect the signal when the user passes by the store in which the wireless terminal 300 is installed, and a process of purchasing an item or a service described below is performed.

Next, in S104, the peripheral apparatus 200 that has detected the signal from the wireless terminal 300 establishes communication with the wireless terminal 300 on the basis of detection of the signal. For example, the peripheral apparatus 200 and the wireless terminal 300 may establish communication by performing pairing via Bluetooth (registered trademark). Note that the peripheral apparatus 200 may be configured to establish communication with the wireless terminal 300 in a case where the predetermined signal from the wireless terminal 300 includes the identification information indicating being compatible with the purchase system of the present embodiment or the identification information indicating a specified store or selling agency.

After communication between the peripheral apparatus 200 and the wireless terminal 300 is established, the peripheral apparatus 200 transmits the purchase condition, the delivery information, and the user identification information stored on the storage unit 206 to the wireless terminal 300 via the established communication in S106. Then, the wireless terminal 300 transmits the received purchase condition, delivery information, and user identification information to the server 500. Note that, herein, in a case where the peripheral apparatus 200 is equipped with a small capacity battery, it is useful for the peripheral apparatus 200 to transmit the delivery information and the user identification information together with the purchase condition so as to reduce the number of times of exchange of information between the peripheral apparatus 200 and the wireless terminal 300.

In S108, the server 500 that has received the purchase condition and the like specifies the user by comparing the received user identification information with user identification information stored on the storage unit 506.

Next, in S110, the server 500 searches a database or the like of items stored on the storage unit 506 on the basis of information regarding an item included in the purchase condition. The database stored on the storage unit 506 may store information regarding items in association with a selling condition of the items. Herein, the selling condition may include at least one piece of information regarding a price, a manufacturing company, a production area, a quantity, ingredients, a size, a volume, color, and weight of each item. Note that, in a case where information processing regarding a service is performed, a database may include, as a selling condition of services, at least one piece of information regarding a price, a providing company, a date and time, and a place of each service.

Therefore, for example, in a case where the received purchase condition is a purchase condition in which "a carrot is purchased in a case where a price thereof is 50 yen or less" as shown in FIG. 13, the server 500 searches for a carrot in the database. Then, in a case where the server 500 determines that a carrot is included in the database, then the server 500 searches for a selling condition of the carrot by using the database.

In a case where a condition in which a selling price of a carrot is 40 yen is registered on the database, the server 500 determines that the selling condition stored on the database satisfies the received purchase condition. Meanwhile, in a case where a condition in which a selling price of a carrot is 60 yen is registered on the database, the server 500 determines that the selling condition stored on the database does not satisfy the received purchase condition.

In a case where the server 500 determines that the selling condition satisfies the received purchase condition in S110, then the server 500 transmits a request for the payment information to the peripheral apparatus 200 via the wireless terminal 300 in S112. Note that, in a case where the server 500 determines that the selling condition does not satisfy the received purchase condition in S110, the server 500 may transmit a negative response to the peripheral apparatus 200 via the wireless terminal 300. In this case, the processing is terminated by this transmission of the negative response.

The peripheral apparatus 200 that has received the request for the payment information from the server 500 transmits the stored payment information to the server 500 via the wireless terminal 300 (S114).

Herein, the reason why the peripheral apparatus 200 does not transmit the payment information together with the purchase condition and the like in S106 is that the payment information is desirably transmitted at an appropriate timing in order to prevent wiretapping and the like because the payment information is important information. In other words, in a case where the payment information is necessary (in a case where an item satisfying the purchase condition is found), the payment information is preferably transmitted.

Meanwhile, the payment information may be transmitted together with the purchase condition and the like in S106 in view of saving a battery of the peripheral apparatus 200. At this time, the purchase condition and the like may be transmitted by using an existing encryption technology such as public-key cryptography or a symmetric-key algorithm in order to prevent the payment information from being wiretapped and being fraudulently used. As a matter of course, the encryption technology may be used in the whole communication or part of communication between the smartphone 100, the peripheral apparatus 200, the wireless terminal 300, and the server 500. However, in terms of the battery of the peripheral apparatus 200, the encryption technology that consumes additional power is not used, and information transmitted from the peripheral apparatus 200 or information transmitted to the peripheral apparatus 200 may be transmitted without using the encryption technology.

Then, in S116, the server 500 that has received the payment information performs payment regarding selling of the item by using the received payment information. A method of the payment performed herein may be different depending on the used payment information. For example, in a case where a credit card is used as the method of the payment, the server 500 may perform payment by performing communication with a management server managed by a credit card company. Further, in a case where prepaid digital currency is used as the method of the payment, the server 500 may perform payment on the basis of received balance information and the like of digital currency without performing communication with another server.

Then, in S118, the server 500 transmits receipt information regarding the completed payment to the peripheral apparatus 200 via the wireless terminal 300. For example, in a case where content of the payment performed in S116 is content indicating that "a carrot is purchased for 40 yen", the receipt information includes "carrot" as a name of the purchased item and "40 yen" as a purchase price. Further, the receipt information may include the delivery information transmitted in S106 and may include purchase history information regarding a selling date and time of the item. Further, in a case where the store provides an original bonus service such as a point reward service, the receipt information may include information regarding a point(s) given on the basis of purchase of the item. The peripheral apparatus 200 that has received the receipt information may store the received receipt information on the storage unit 206. Further, the peripheral apparatus 200 that has received the receipt information may delete the purchase condition regarding the item included in the receipt information.

In S120, the peripheral apparatus 200 that has received the receipt information transmits a confirmation response for confirming that the payment has been performed to the server 500.

Then, in S122, the peripheral apparatus 200 transmits the stored receipt information to the smartphone 100 when the smartphone 100 is connected to the peripheral apparatus 200. Herein, the smartphone 100 that has received the receipt information may delete the purchase condition regarding the item included in the receipt information.

Note that, specifically, the above-mentioned processing in S100 is performed by the processing unit 102 of the smartphone 100. Further, the above-mentioned processing in S102, S104, S106, S114, S120, and S122 are performed by the processing unit 202 of the peripheral apparatus 200. Further, the above-mentioned processing in S108, S110, S112, S116, and S118 are performed by the processing unit 502 of the server 500.

Performing the above information processing prevents the user from forgetting to purchase an item that the user desires to purchase. Further, an item or a service is purchased on the basis of a purchase condition set by the user in advance. Further, the user can purchase the item or the service in an actual store.

Note that, in the example of the information processing shown in FIG. 19, an item is automatically purchased without getting a confirmation from the user. However, the above-mentioned example of the information processing may be changed to get a confirmation from the user at the time of purchase of an item.

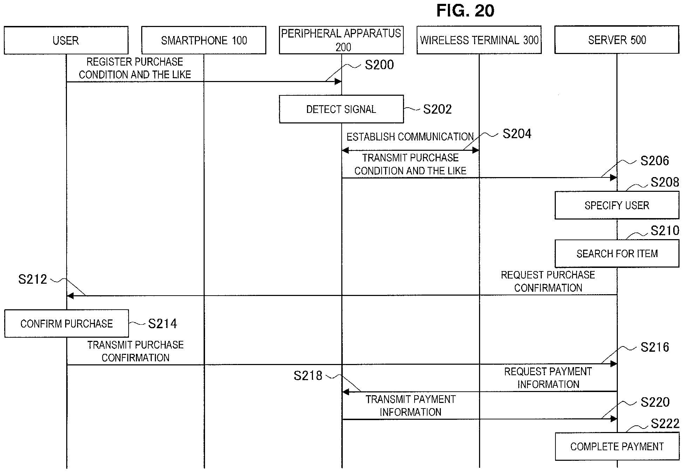

FIG. 20 is a diagram showing an example of information processing that is changed to get a confirmation from the user at the time of purchase of an item. S200 to S210 and S218 to S222 in FIG. 20 correspond to S100 to S110 and S112 to S116 in FIG. 19, respectively, and therefore description thereof is omitted.

In a case where the server 500 determines that a selling condition satisfies a received purchase condition in S210, then, in S212, the server 500 transmits a request for a purchase confirmation to the peripheral apparatus 200 via the wireless terminal 300. The peripheral apparatus 200 that has received the request for the purchase confirmation transfers the request for the purchase confirmation to the connected smartphone 100. The smartphone 100 that has received the request for the purchase confirmation notifies the user of the purchase confirmation by, for example, displaying a target item whose purchase confirmation is requested and information regarding the item (e.g. a selling price or the like) on the display unit 110.

Then, in S214, the user confirms the information displayed on the display unit 110 and confirms purchase by operating the operation unit 108 of the smartphone 100. In a case where the user performs operation to purchase the item in S214, a purchase confirmation indicating a positive response is transmitted to the server 500 in S216, and processing in S218 to S222 is performed. Meanwhile, in a case where the user performs operation not to purchase the item in S214, a purchase confirmation indicating a negative response is transmitted to the server 500 in S216 and the processing subsequent thereto is not performed.

Because the user is requested to confirm purchase of an item as described above, an item that the user does not need to purchase anymore is prevented from being purchased. This is useful in a case where, for example, the user has already purchased an item set in the purchase condition or in other cases.

### (4-3. Example of automatically setting purchase condition)

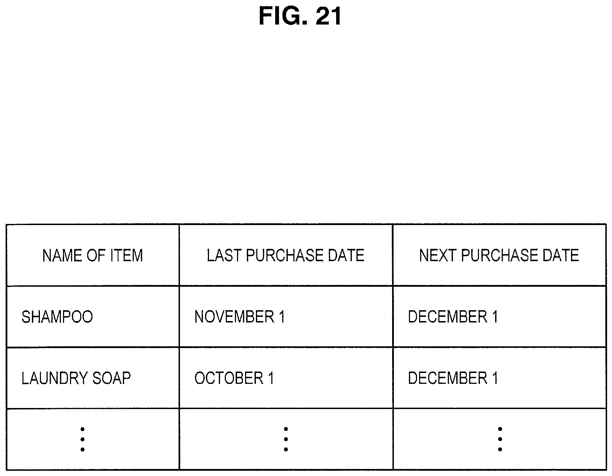

In the above description, an example of the information processing method in the present embodiment has been described. Hereinafter, an example where the next purchase date is automatically set will be described. FIG. 21 is a diagram showing that the next purchase date is set on the basis of purchase information indicating the last purchase history.

For example, the smartphone 100 prepares a table shown in FIG. 21 on the basis of the information regarding the item included in the receipt information received in S122 in FIG. 19 and purchase information thereof.

As shown in FIG. 21, in a case where the last purchase date of a shampoo is November 1, the smartphone 100 sets the next purchase date to December 1, i.e., one month later. Then, a purchase condition (e.g. a price) similar to that at the time of the last purchase is set. Further, in a case where the last purchase date of a laundry soap is October 1, the smartphone 100 may set the next purchase date to December 1, i.e., two months later. As described above, the smartphone 100 may set different intervals between the next purchase date and the last purchase date depending on items. This is because a consumption period is different depending on items. Note that the interval between the next purchase date and the last purchase date may be arbitrarily set by the user.

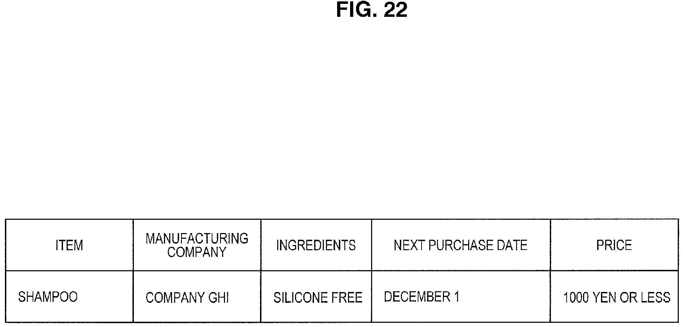

Then, the smartphone 100 sets information regarding the next purchase date in a purchase condition and stores the information. At this time, the smartphone 100 may transmit, to the peripheral apparatus 200, the purchase condition in which the information regarding the next purchase date is set. FIG. 22 is a diagram showing a purchase condition to which information regarding the next purchase date is added. As shown in FIG. 22, for example, the purchase condition regarding the shampoo transferred to the peripheral apparatus 200 is a condition in which "in a case where a price of a silicone-free shampoo of the company GHI is 1000 yen or less, the shampoo will be purchased on and after December 1".

Note that the smartphone 100 does not need to add information regarding the next purchase date to the purchase condition and transmit the purchase condition to the peripheral apparatus 200 until the next purchase date comes. In other words, even in a case where purchase conditions are updated in the peripheral apparatus 200 before December 1, a purchase condition regarding an item whose next purchase date does not come does not need to be transmitted to the peripheral apparatus 200.

As described above, automatically setting the next purchase date on the basis of a purchase history of the last purchase date prevents the user from forgetting to purchase an item or a service more securely.

In the above description, the next purchase date is determined on the basis of purchase information indicating the last purchase history. However, the next purchase date may be determined on the basis of a purchase history of the last time or a previous time therebefore.

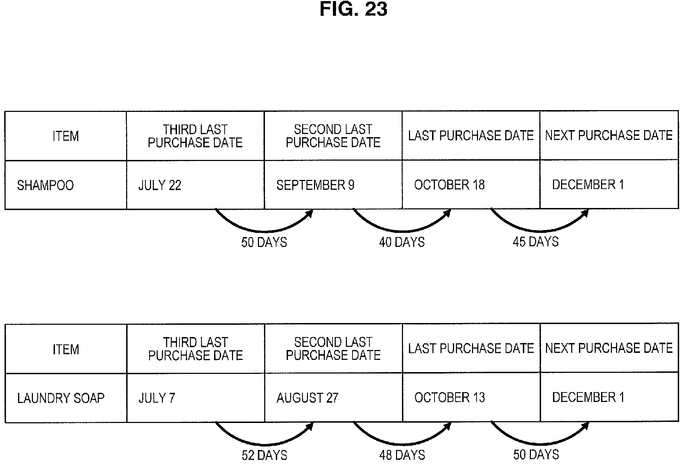

FIG. 23 is a diagram showing an example where the next purchase date is determined on the basis of a purchase history from the third last time to the last time. For example, regarding a shampoo, there will be described a case where the third last purchase date is July 22, the second last purchase date is September 9, and the last purchase date is October 18.

As shown in FIG. 23, the number of days from July 22 to September 9 is 50 days, and the number of days from September 9 to October 18 is 40 days. The smartphone 100 determines the next purchase date on the basis of the number of days that is a mean of those purchase dates. For example, the smartphone 100 may determine that an interval between the last purchase date and the next purchase date is 45 days that is an average of 50 days and 40 days. In other words, the smartphone 100 may set the next purchase date to December 1, i.e., 45 days after the last purchase date.

Similarly, regarding a laundry soap, there will be described a case where the third last purchase date is July 7, the second last purchase date is August 27, and the last purchase date is October 13. As shown in FIG. 23, the number of days from July 7 to August 27 is 52 days and the number of days from August 27 to October 13 is 48 days. As described above, the number of days between the purchase dates of the laundry soap is expected to be different from the number of days between the purchase dates of the shampoo.

Then, the smartphone 100 determines the next purchase date on the basis of the number of days between the purchase dates of the laundry soap. For example, the smartphone 100 may determine that an interval between the last purchase date and the next purchase date is 50 days that is an average of 52 days and 48 days. In other words, the smartphone 100 may set the next purchase date to December 1, i.e., 50 days after the last purchase date.

Note that, in the above-mentioned example, the next purchase date is set on the basis of purchase information indicating a predetermined number of times of past purchases. However, the next purchase date may be set on the basis of purchase information indicating a purchase history in a past predetermined period. For example, the next purchase date may be set on the basis of purchase information indicating a purchase history in a past six months. In this case, for example, in a case where three purchase dates are included in the past six months, the next purchase date may be set by a method similar to the above-mentioned method.

As described above, because the next purchase date is set on the basis of a past purchase history, a purchase date is set further on the basis of a consumption tendency of the user.

### (4-4. Example where similar item or similar service is purchased)

In the above description, an example where a purchase condition, in particular, the next purchase date is automatically set has been described. Hereinafter, an example where a similar item or a similar service is purchased will be described. In the example of the information processing that has been described with reference to FIG. 19, in a case where a purchase condition does not satisfy a selling condition in S110, an item or a service is not purchased. However, in a case where the user intends to purchase a similar item or a similar service that is similar to an item or a service set in the purchase condition, the similar item or the similar service may be purchased.

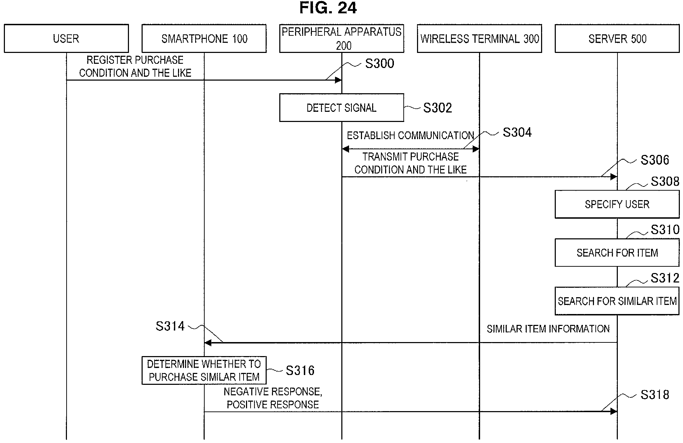

FIG. 24 is a diagram showing an example of information processing for purchasing the above-mentioned similar item. Note that, hereinafter, an example where a similar item is purchased will be described. However, an information processing method for purchasing a similar service is also achieved by an information processing method similar to the following information processing method. Further, S300 to S310 in FIG. 24 correspond to S100 to S110 in FIG. 19, respectively, and therefore description thereof is omitted.

In a case where the server 500 determines that a selling condition does not satisfy a received purchase condition in S310, the processing proceeds to S312. Note that description will be provided on the assumption that the purchase condition received in FIG. 24 is the purchase condition regarding the shampoo shown in FIG. 16 (The manufacturing company is the company GHI, silicone is not contained as ingredients, the volume is 500 ml, and the price is 1,000 yen or less.).

In S312, the server 500 searches for a similar item in a stored database on the basis of information included in the received purchase condition. For example, the server 500 may search for the similar item on the basis of information regarding the item and information regarding the price included in the purchase condition. Herein, in a case where the information regarding the item included in the received purchase condition indicates a shampoo and the information regarding the price included in the purchase condition is 1,000 yen or less, the server 500 searches for a similar item that satisfies those conditions.

Then, in S314, the server 500 transmits information regarding the similar item (shampoo) that has been searched for (e.g. information regarding a price, a manufacturing company, a production area, a quantity, ingredients, a size, a volume, color, and weight of the item) to the smartphone 100.

In S316, the smartphone 100 that has received the information regarding the similar item determines whether to purchase the similar item. Regarding determination on purchase of the similar item, for example, whether to purchase the similar item is determined on the basis of a similar item purchase condition set in the smartphone 100 in advance. The similar item purchase condition is set on the basis of one or a plurality of combinations of pieces of information (e.g. information regarding a price, a manufacturing company, a production area, a quantity, ingredients, a size, a volume, color, and weight of the item) included in the purchase condition.

For example, in a case where the similar item purchase condition regarding the shampoo indicates that the manufacturing company is the company GHI, the smartphone 100 searches for a shampoo whose manufacturing company is the company GHI in the received similar item information. Further, in a case where the similar item purchase condition regarding the shampoo indicates that silicone is not contained as ingredients and the volume is 500 ml, the smartphone 100 determines whether a shampoo that does not contain silicone as ingredients and whose volume is 500 ml is included in the received similar item information.

In a case where the smartphone 100 determines that a similar item satisfying the set similar item purchase condition is not included in the received information regarding the similar item in S316, the smartphone 100 transmits a negative response to the server 500 in S318. With this, the processing is terminated.

Meanwhile, in a case where the smartphone 100 determines that a similar item satisfying the set similar item purchase condition is included in the received information regarding the similar item in S316, the smartphone 100 transmits a positive response together with information regarding the similar item satisfying the similar item purchase condition to the server 500 in S318.

The server 500 that has received the positive response and the information regarding the similar item from the smartphone 100 may request payment information as in S112 shown in FIG. 19. Further, thereafter, the processing in S114 to S122 shown in FIG. 19 may be executed.

Note that the search for a similar item in S312 may be performed by a method different from the above-mentioned method. For example, the server 500 may search for a similar item on the basis of information regarding an item included in the received purchase condition. At this time, in a case where the item included in the purchase condition is a shampoo, the server 500 may specify all shampoos possessed by a store as similar items in S314.

Further, the server 500 may search for a similar item on the basis of image information in S312. For example, in a case where the item included in the purchase condition is a shampoo, the server 500 may search for a similar item on the basis of an image of a shampoo stored on the storage unit 506.

As described above, the server 500 transmits information regarding a similar item or a similar service similar to an item or a service included in the purchase condition to the smartphone 100 and purchase of the similar item or the similar service is determined by the smartphone 100. With this, a purchase system that further satisfies a request from the user is established.

Note that, in the example of the information processing shown in FIG. 24, a similar item is automatically purchased without getting a confirmation from the user. However, the above-mentioned example of the information processing may be changed to get a confirmation from the user at the time of purchase of a similar item.

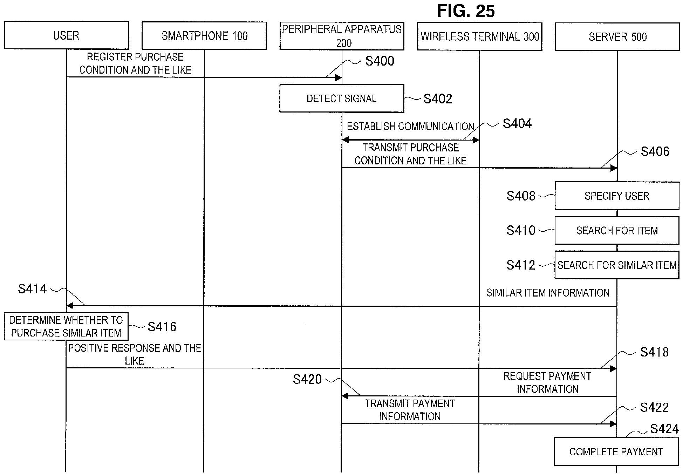

FIG. 25 is a diagram showing an example of information processing that is changed to get a confirmation from the user at the time of purchase of a similar item. S400 to S414 in FIG. 25 correspond to S300 to S314 in FIG. 24, respectively, and S420 to S424 in FIG. 25 correspond to S112 to S116 in FIG. 19, respectively, and therefore description thereof is omitted.

When the server 500 transmits information regarding a similar item in S414, the smartphone 100 that has received the information regarding the similar item displays the information regarding the similar item (e.g. information regarding a price, a manufacturing company, a production area, a quantity, ingredients, a size, a volume, color, and weight of the item) on the display unit 110.

Then, in S416, the user confirms the information displayed on the display unit 110 and selects a similar item to be purchased by operating the operation unit 108 of the smartphone 100. In a case where the user performs operation to select a similar item in S416, a positive response is transmitted together with the information regarding the similar item to be purchased to the server 500 in S418, and processing in S420 to S424 is performed. Meanwhile, in a case where the user performs operation not to purchase the item in S416, a negative response is transmitted to the server 500 in S418 and the processing subsequent thereto is not performed.

Because the user is requested to confirm purchase of a similar item as described above, an item that the user does not need to purchase anymore is prevented from being purchased. This is useful in a case where, for example, the user has already purchased an item set in the purchase condition or in other cases.

### <5. Supplement>

The preferred embodiment (s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

For example, the above-mentioned purchase system may be applied to order processing in a restaurant or the like. The user registers a purchase condition (e.g. to purchase a hamburger for 150 yen or less) on the peripheral apparatus 200 in advance, and therefore, when the user enters a restaurant, order processing may be performed on the basis of the above-mentioned purchase condition. The purchase system of the present embodiment is applied as described above, and therefore the user can place an order without spending a waiting time for ordering an item in the restaurant.

Further, in the above-mentioned example, the purchase system in which the smartphone 100 and the peripheral apparatus 200 are different apparatuses has been described. However, the smartphone 100 may have the above-mentioned function of the peripheral apparatus 200, and, in this case, the peripheral apparatus 200 does not need to exist.

Specifically, the smartphone 100 may store the purchase condition shown in FIGS. 13 to 17 on the storage unit 112 and transmit the information shown in FIG. 18 to the wireless terminal 300. More specifically, the smartphone 100 may detect a predetermined signal from the wireless terminal 300 in S102 shown in FIG. 19 and may establish communication with the wireless terminal 300 in S104 shown therein.

Further, the smartphone 100 may transmit a purchase condition and the like in S106 shown in FIG. 19, may receive a request for payment information in S112 shown therein, and may transmit the payment information in S114 shown therein. Further, the smartphone 100 may receive and store receipt information in S118 shown in FIG. 19 and may transmit a confirmation response in S120 shown therein.

Further, in the above-mentioned example, the purchase system in which the wireless terminal 300 and the server 500 are different apparatuses has been described. However, the wireless terminal 300 may have the above-mentioned function of the server 500, and, in this case, the server 500 does not need to exist.

Specifically, the wireless terminal 300 may specify a user in S108 shown in FIG. 19 and may search for an item on the basis of a received purchase condition in S110 shown therein. Further, the wireless terminal 300 may request payment information in S112 shown in FIG. 19, may perform processing regarding payment in S116 shown therein, and may transmit receipt information in S118 shown therein.

Further, the wireless terminal 300 may transmit a purchase confirmation request in S212 shown in FIG. 20. Further, the wireless terminal 300 may search for a similar item in S312 shown in FIG. 24 and may transmit information regarding the similar item in S314 shown therein.

Further, computer programs for causing the processing unit 102 of the smartphone 100, the processing unit 202 of the peripheral apparatus 200, the processing unit 302 of the wireless terminal 300, and the processing unit 502 of the server 500 to perform the operations described above with reference to FIGS. 19, 20, 24, and 25 may be provided. Further, a storage medium on which such programs are stored may be provided.

Further, the processing unit 102 of the smartphone 100 may include a plurality of function blocks. For example, the processing unit 102 of the smartphone 100 may include a purchase condition setting unit that sets a purchase condition, a communication control unit that controls the first communication unit 104 and the second communication unit 106, a display control unit that controls the display unit 110, and an information acquisition unit that acquires information from the storage unit 112.

Further, the processing unit 202 of the peripheral apparatus 200 may also include a plurality of function blocks. For example, the processing unit 202 of the peripheral apparatus 200 may include a communication control unit that controls the communication unit 204, a detection unit that detects a signal from the wireless terminal 300, and an information acquisition unit that acquires information from the storage unit 206.

Further, the processing unit 502 of the server 500 may also include a plurality of function blocks. For example, the processing unit 502 of the server 500 may include a communication control unit that controls the communication unit 504, a user specification unit that specifies a user on the basis of user identification information, a search unit that searches for an item or a service, a condition determination unit that compares a purchase condition with a selling condition, a payment unit that performs payment processing, and a receipt information generation unit that generates receipt information. Further, the processing unit 502 of the server 500 may further include a similarity search unit that searches a similar item or a similar service.

Further, in the above-mentioned example, the smartphone 100, the peripheral apparatus 200, and the server 500 have been described as examples of an information processing apparatus that executes the information processing of the present embodiment. However, the above-mentioned apparatus is not limited thereto. For example, an information processing apparatus such as a laptop computer, a tablet computer, a desktop computer, or a PDA may be used instead of the smartphone 100. Further, the peripheral apparatus 200 may include headphones, glasses, or the like capable of performing the above-mentioned information processing. Further, the server 500 does not need to be connected to another apparatus in a wired manner and may be a portable computer.

### <6. Conclusion>

As described above, in the purchase system of the present disclosure, communication between the peripheral apparatus 200 and the wireless terminal 300 is established when the peripheral apparatus 200 detects a predetermined signal from the wireless terminal 300, and a purchase condition is transmitted from the peripheral apparatus 200 by using the established communication. Then, the server 500 that has received the purchase condition performs processing regarding selling of an item on the basis of the received purchase condition. With such the purchase system, it is possible to prevent a user from forgetting to purchase an item or a service. Further, the item or the service is purchased on the basis of the purchase condition set by the user in advance. Further, the item or the service is purchased in an actual store.

Additionally, the present technology may also be configured as below.
(1) An information processing apparatus including:
   a processing unit configured to, in a case where a predetermined signal wirelessly transmitted from an external apparatus is detected, cause communication to be established with the external apparatus and cause purchase condition information indicating a purchase condition of one or both of an item and a service to be transmitted to the external apparatus via the communication established with the external apparatus.
(2) The information processing apparatus according to (1),
   in which the purchase condition of the item includes information indicating the item and information regarding a price of the item, and the purchase condition of the service includes information indicating the service and information regarding a price of the service.
(3) The information processing apparatus according to (2),
   in which the purchase condition of the item further includes at least one of pieces of information regarding a manufacturing company, a production area, a quantity, ingredients, a size, a volume, color, and weight of the item, and the purchase condition of the service includes at least one of pieces of information regarding a providing company, a date and time, and a place of the service.
(4) The information processing apparatus according to any one of (1) to 3,
   in which the processing unit further causes payment information for use in payment to be transmitted to the external apparatus.
(5) The information processing apparatus according to (4),
   in which the payment information is transmitted together with the purchase condition information.
(6) The information processing apparatus according to any one of (1) to 5,
   in which the processing unit further causes delivery information for delivering the item to be transmitted to the external apparatus.
(7) The information processing apparatus according to any one of (1) to 6,
   in which the processing unit further causes user identification information for specifying a user to be transmitted to the external apparatus.
(8) The information processing apparatus according to any one of (1) to 7,
   in which the processing unit sets a next purchase date on the basis of purchase information indicating at least a last purchase history and sets information regarding the item or the service in the purchase condition information on the basis of the set next purchase date.
(9) The information processing apparatus according to (8),
   in which an interval between the set next purchase date and a last purchase date is different depending on the item or the service.
(10) The information processing apparatus according to (8),
   in which the processing unit sets the next purchase date on the basis of the past purchase information for a predetermined number of times of purchases and sets the information regarding the item or the service in the purchase condition information on the basis of the set next purchase date.
(11) The information processing apparatus according to (8),
   in which the processing unit sets the next purchase date on the basis of the purchase information in a past predetermined period of time and sets the information regarding the item or the service in the purchase condition information on the basis of the set next purchase date.
(12) The information processing apparatus according to any one of (3) to 11,
   in which the processing unit determines whether to purchase a similar item or a similar service on the basis of similar item information indicating the similar item similar to the item included in the purchase condition information of the item received from the external apparatus or similar service information indicating the similar service similar to the service included in the purchase condition information of the service.
(13) The information processing apparatus according to (12),
   in which the processing unit determines whether to purchase the similar item or the similar service on the basis of a similarity purchase condition for determining whether to purchase the similar item or the similar service.
(14) The information processing apparatus according to (13),
   in which the similarity purchase condition is set on the basis of one or a plurality of combinations of the pieces of the purchase condition.
(15) A program for causing a computer to achieve
   a function of, in a case where a predetermined signal wirelessly transmitted from an external apparatus is detected, causing communication to be established with the external apparatus and causing purchase condition information indicating a purchase condition of one or both of an item and a service to be transmitted to the external apparatus via the communication established with the external apparatus.
(16) An information processing apparatus including:
   a processing unit configured to determine whether a purchase condition of one or both of an item and a service indicated by purchase condition information that an external apparatus transmits in response to detection of a predetermined signal satisfies a set selling condition and perform processing regarding selling on the basis of a result of the determination.

### Reference Signs List

- 100: smartphone
- 200: peripheral apparatus
- 300: wireless terminal
- 500: server

## Claims

1. An information processing apparatus comprising:
a processing unit configured to, in a case where a predetermined signal wirelessly transmitted from an external apparatus is detected, cause communication to be established with the external apparatus and cause purchase condition information indicating a purchase condition of one or both of an item and a service to be transmitted to the external apparatus via the communication established with the external apparatus.

2. The information processing apparatus according to claim 1,
wherein the purchase condition of the item includes information indicating the item and information regarding a price of the item, and the purchase condition of the service includes information indicating the service and information regarding a price of the service.

3. The information processing apparatus according to claim 2,
wherein the purchase condition of the item further includes at least one of pieces of information regarding a manufacturing company, a production area, a quantity, ingredients, a size, a volume, color, and weight of the item, and the purchase condition of the service includes at least one of pieces of information regarding a providing company, a date and time, and a place of the service.

4. The information processing apparatus according to claim 1,
wherein the processing unit further causes payment information for use in payment to be transmitted to the external apparatus.

5. The information processing apparatus according to claim 4,
wherein the payment information is transmitted together with the purchase condition information.

6. The information processing apparatus according to claim 1,
wherein the processing unit further causes delivery information for delivering the item to be transmitted to the external apparatus.

7. The information processing apparatus according to claim 1,
wherein the processing unit further causes user identification information for specifying a user to be transmitted to the external apparatus.

8. The information processing apparatus according to claim 1,
wherein the processing unit sets a next purchase date on a basis of purchase information indicating at least a last purchase history and sets information regarding the item or the service in the purchase condition information on a basis of the set next purchase date.

9. The information processing apparatus according to claim 8,
wherein an interval between the set next purchase date and a last purchase date is different depending on the item or the service.

10. The information processing apparatus according to claim 8,
wherein the processing unit sets the next purchase date on a basis of the past purchase information for a predetermined number of times of purchases and sets the information regarding the item or the service in the purchase condition information on a basis of the set next purchase date.

11. The information processing apparatus according to claim 8,
wherein the processing unit sets the next purchase date on a basis of the purchase information in a past predetermined period of time and sets the information regarding the item or the service in the purchase condition information on a basis of the set next purchase date.

12. The information processing apparatus according to claim 3,
wherein the processing unit determines whether to purchase a similar item or a similar service on a basis of similar item information indicating the similar item similar to the item included in the purchase condition information of the item received from the external apparatus or similar service information indicating the similar service similar to the service included in the purchase condition information of the service.

13. The information processing apparatus according to claim 12,
wherein the processing unit determines whether to purchase the similar item or the similar service on a basis of a similarity purchase condition for determining whether to purchase the similar item or the similar service.

14. The information processing apparatus according to claim 13,
wherein the similarity purchase condition is set on a basis of one or a plurality of combinations of the pieces of the purchase condition.

15. A program for causing a computer to achieve
a function of, in a case where a predetermined signal wirelessly transmitted from an external apparatus is detected, causing communication to be established with the external apparatus and causing purchase condition information indicating a purchase condition of one or both of an item and a service to be transmitted to the external apparatus via the communication established with the external apparatus.

16. An information processing apparatus comprising:
a processing unit configured to determine whether a purchase condition of one or both of an item and a service indicated by purchase condition information that an external apparatus transmits in response to detection of a predetermined signal satisfies a set selling condition and perform processing regarding selling on a basis of a result of the determination.
